# EUROPEAN PATENT SPECIFICATION

(11) **EP 3 525 156 B1**
(45) Date of publication and mention of the grant of the patent: **29.12.2021**
(21) Application number: 18763544.6
(22) Date of filing: 02.03.2018
(51) Int. Cl.: G06Q 30/06, G06K 9/00, G07G 1/12

(54) **ORDER INFORMATION DETERMINING METHOD AND APPARATUS**
VERFAHREN UND VORRICHTUNG ZUM BESTIMMEN VON AUFTRAGSINFORMATIONEN
PROCÉDÉ ET APPAREIL DE DÉTERMINATION D'INFORMATIONS DE COMMANDE

(30) Priority: 07.03.2017 CN 201710132344
(43) Date of publication of application: 14.08.2019
(73) Proprietor: Advanced New Technologies Co., Ltd., George Town, Grand Cayman KY1-9008 (KY)
(72) Inventor: LI, Jiajia, Hangzhou, Zhejiang 311121 (CN); JIAO, Lei, Hangzhou, Zhejiang 311121 (CN)
(74) Representative: Fish & Richardson P.C.
(86) International application number: PCT/CN2018/077889
(87) International publication number: WO 2018/161857

(56) References cited:
- CN-A- 105 913 559
- CN-A- 106 203 547
- CN-A- 107 103 503
- US-A1- 2002 170 961
- US-A1- 2015 039 458
- US-A1- 2016 203 499
- MO JOHN P T ET AL: "Gesture interpreter for randomised supply chain operations using 3D cameras array", 2016 10TH INTERNATIONAL CONFERENCE ON SOFTWARE, KNOWLEDGE, INFORMATION MANAGEMENT & APPLICATIONS (SKIMA), IEEE, 15 December 2016 (2016-12-15), pages 73-78, XP033090756, DOI: 10.1109/SKIMA.2016.7916200 [retrieved on 2017-05-01]

## Description

### TECHNICAL FIELD

The present patent relates to the field of Internet technologies, and in particular, to an order information determination method and apparatus.

### BACKGROUND

After selecting commodities in a conventional physical store, consumers need to queue up at checkout counters to pay for the commodities, and the checkout staffs use computers to pay for the commodities. However, this payment process is often inefficient, and it is likely to take a long waiting time. To improve payment efficiency, in the existing technology, when a consumer selects and purchases commodities, a selection and purchase process of the consumer can be analyzed in real time based on a technology such as computer vision, to determine commodities taken by the consumer and commodities put back by the consumer, so as to modify and determine order information, that is, a bill list of the consumer. However, in the previous analysis process, there are many factors that can cause inaccurate determination, for example, inaccurate determination occurs when many people simultaneously take commodities on a lower shelf, or an identification device is shielded and makes an erroneous decision when the consumer put commodities with extremely high similarity back to wrong places. All of these factors can cause inaccurate determination of the order information, and affect commodity payment.

US 2015/0039458 A1 describes automated retail checkout using context recognition.

"Gesture interpreter for randomised supply chain operations using 3D cameras array," John P.T. Mo et al, describes an array of 3D cameras with associated software for detecting features of human joints within each camera's line of sight. This information is then linked to the virtualized information infrastructure to complete the reciprocated picking process at the end of a supply chain.
US 20161203499 A1 describes a customer behavior analysis system. The customer behavior analysis system detects whether a customer is holding or looking at a product and generates data representing a relationship between a result of the detection and a purchase result of the product by the customer. The generated data is provided for analysis of customer behavior.

### SUMMARY

The present patent provides an order information determination method according to claim 1 and an and apparatus according to claim 6, to determine order information of commodities more quickly and accurately, so that a commodity on an order is associated with a consumer.

The present patent is defined by the claims.

According to the order information determination method and apparatus in the present patent, order information of a consumer can be quickly and accurately determined, and payment of an order are automatically completed. After completing shopping, the consumer can directly leave without queuing up at a checkout counter for payment, thereby improving shopping efficiency and providing fairly good shopping experience.

### BRIEF DESCRIPTION OF DRAWINGS

FIG. 1 illustrates an area layout of a convenience store, according to an implementation of the present patent;
FIG. 2 is a schematic diagram illustrating a more detailed layout inside a convenience store, according to an implementation of the present patent;
FIG. 3 is a schematic structural diagram illustrating a computing device, according to an implementation of the present patent;
FIG. 4 is a flowchart illustrating an order information determination procedure, according to an implementation of the present patent; and
FIG. 5 is a schematic structural diagram illustrating an order information determination apparatus, according to an implementation of the present patent.

### DESCRIPTION OF IMPLEMENTATIONS

In people's daily life, shopping in supermarkets, shopping malls, convenience stores, etc., is a common shopping behavior. After selecting and purchasing commodities, a customer needs to queue up at a checkout counter at an exit to pay for the commodities, which is time-consuming and inconvenient. To improve shopping efficiency, a shopping management system can be used to automatically identify a commodities selected and purchased by a consumer during shopping, determine an association relationship between the consumer and the commodities selected and purchased by the consumer, and automatically push a corresponding bill to the consumer for self-service payment. As such, the consumer does not need to queue at the exit to pay for the commodities, thereby improving shopping efficiency.

An important factor for implementing the previous method is to determine an association relationship between a consumer and commodities selected and purchased by the consumer, and a bill corresponding to the consumer can be obtained only after the association relationship is determined. In the present patent, this association relationship can be referred to as "order information", that is, commodities selected and purchased by a consumer. An order information determination method provided in the present patent is intended to determine the order information simply and accurately, to assist in quick payment.

A processing process of the order information determination method in the present patent is described below by using an example that a consumer shops in a convenience store. However, the method can also be applied to another scenario, such as a scenario in which an association relationship between a person and an article needs to be determined, for example, shopping in a supermarket, shopping in a shopping mall, inventory monitoring for a warehouse (which person took which thing from the warehouse), and book management for library (which user borrowed which book).

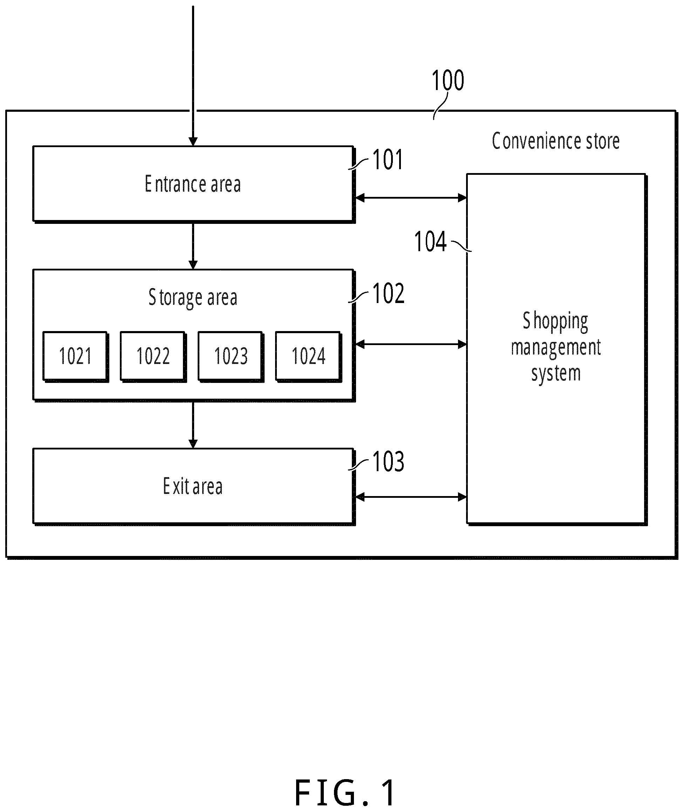

FIG. 1 illustrates an area layout of a convenience store. As shown in FIG. 1, a convenience store 100 can include an entrance area 101, a storage area 102, and an exit area 103. A consumer can enter the convenience store 100 from the entrance area 101, and select and purchase a commodity in the storage area 102. After completing the selection and the purchase, the consumer exits the convenience store from the exit area 103. The storage area 102 can store many commodities. For example, 1021 to 1024 illustrated in FIG. 1 are commodities in the convenience store, and can include fruits, drinks, milk, bread, etc. FIG. 1 illustrates only part of the commodities, and the storage area 102 can actually include more commodities. The layout of the convenience store shown in FIG. 1 is a functional area division, and is not an actual physical area division. In an example, a plurality of entrance areas 101, storage areas 102, and exit areas 103 can be arranged together through merging instead of being arranged separately.

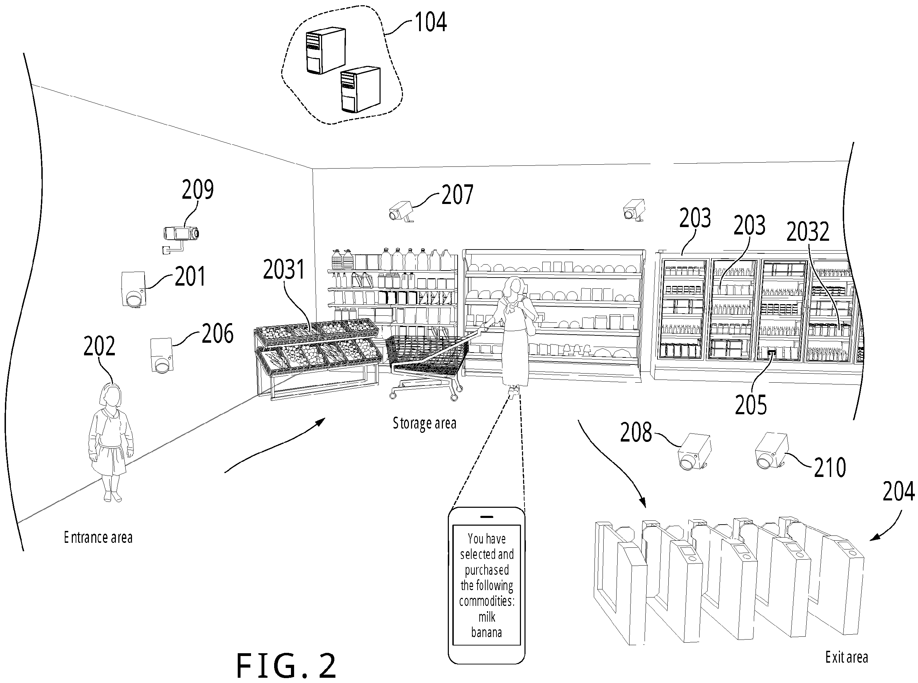

The convenience store 100 in FIG. 1 can further include a shopping management system 104. The shopping management system 104 can communicate and interact with the entrance area 101, the storage area 102, and the exit area 103. FIG. 2 illustrates the layout inside the convenience store in more details. For example, some facial recognition devices 201 can be placed in the entrance area 101 in the convenience store 100. When a consumer 202 enters the convenience store, the facial recognition device 201 can automatically collect facial recognition data of the consumer 202. For example, the facial recognition device 201 can collect images of the consumer in the entrance area, search the image by using a specific policy to determine whether the image includes a face, and return a location, a size, and a gesture of the face if the image includes the face. In addition, the facial recognition device 201 can perform preprocessing and feature extraction on a facial image to obtain facial recognition data. Some shelves 203 can be placed in the storage area 102, and many commodities can be placed on the shelves 203, for example, bananas 2031, and milk 2032 shown in FIG. 2. For example, when selecting and purchasing a commodity, the consumer can hold the commodity with a hand, or hold the commodity with an arm, that is, the consumer can carry the commodity by using a body part. After completing shopping, the consumer can go to the exit area of the convenience store, and exit the convenience store through an exit channel 204 without queuing up for payment. Usually only one person can pass through one exit channel 204 in sequence.

In an example, in the present patent, a radio frequency identification (RFID) label can be attached to each commodity, for example, an RFID label 205 attached to a commodity on the shelf 203 in FIG. 2. Labels on different commodities include different information, and the labels include identification information of the commodities.

As shown in FIG. 2, a plurality of readers configured to receive an RFID label signal can be further installed on a wall, a roof, etc. of the convenience store, for example, a reader 206 disposed in the entrance area, a reader 207 disposed in the storage area, and a reader 208 disposed in the exit area. The reader can transmit received RFID label information to the shopping management system 104, and the shopping management system 104 can store and process the information. In addition, monitoring devices such as cameras 209 can be further disposed in the convenience store, and these monitoring devices can be configured to perform video monitoring in the store. Monitoring information can also be transmitted to the shopping management system 104. The shopping management system 104 can further transmit information in the system to another device for display by using a network device such as a wireless antenna installed in the store. For example, the shopping management system 104 can transmit the information to a smartphone carried by the consumer, so that the consumer can conveniently check the information obtained by the shopping management system by using the mobile phone.

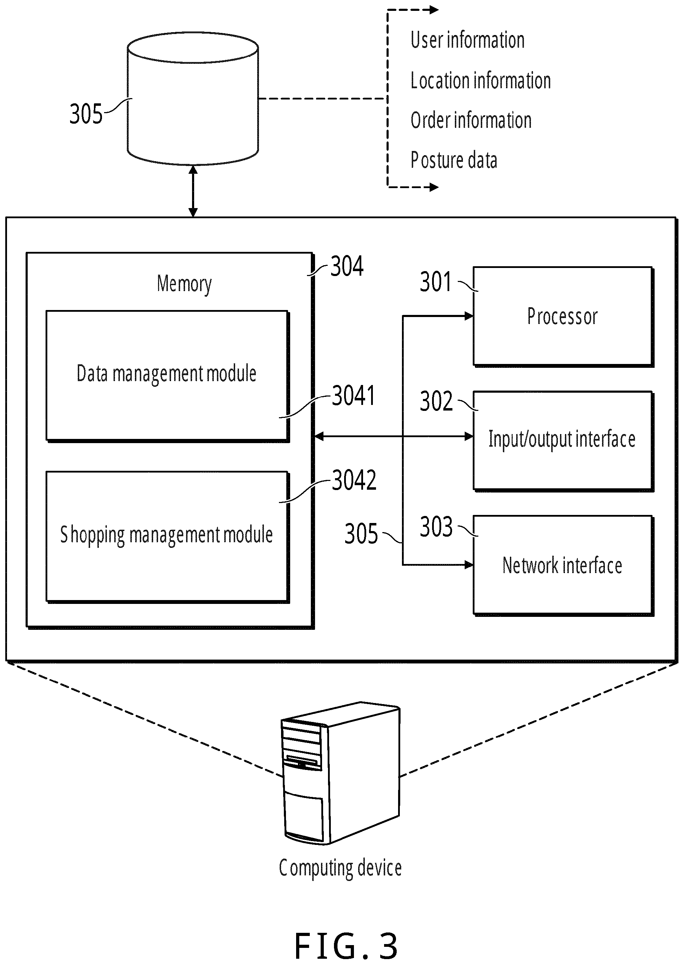

The shopping management system 104 can be a local or remote server system, and can include a plurality of computing processing devices. For example, two computing devices are illustrated in FIG. 2, and there can have more computing devices in actual implementation. As shown in FIG. 3, a computing device can include a processor 301, an input/output interface 302, a network interface 303, and a memory 304. The processor 301, the input/output interface 302, the network interface 303, and the memory 304 can be connected to and communicated with each other by using a bus 305. FIG. 3 illustrates only some components, and an actual computing device can include more or fewer components. The memory 304 can further include a data management module 3041 and a shopping management module 3042. These modules can be in a form of hardware, software, etc., and can be computer-executable programs when they are in the form of software.

For example, the computing device can receive, through the network interface 303, information transmitted by a device such as the RFID label or the camera in the convenience store, and process the information (which is described in detail in a subsequent example), for example, location information of a commodity obtained through positioning by using the RFID label, or member ID information transmitted by the consumer. The processor 301 can process the received information by executing an instruction of the shopping management module 3042, to obtain some latest data, for example, information about a new consumer who enters the convenience store, commodity location information, gesture data of a user, or order information of a consumer. In addition, the processor 301 can update the data to a database 305 by executing an instruction of the data management module 3041.

In an example, the database 305 can store data, for example, the data can include user information, location information, order information, and gesture data. The user information can be member IDs of some users registered with the shopping management system, the location information can be information obtained by positioning a commodity that is described in a subsequent example, the order information can be information about commodities selected and purchased by a consumer, and the gesture data can be data obtained by performing dynamic human gesture recognition on a user that is described in a subsequent description. In addition, the computing device can update the information based on latest received data. For example, the computing device can update the user information when there is a new registered user, can update the location information of the commodity during realtime positioning for the commodity, and can further update the order information based on a commodity change in an order. In addition, the computing device can further output data in the database. For example, the computing device can extract the order information from the database and send the order information to another device such as a mobile phone of a consumer, so that the consumer can check the information.

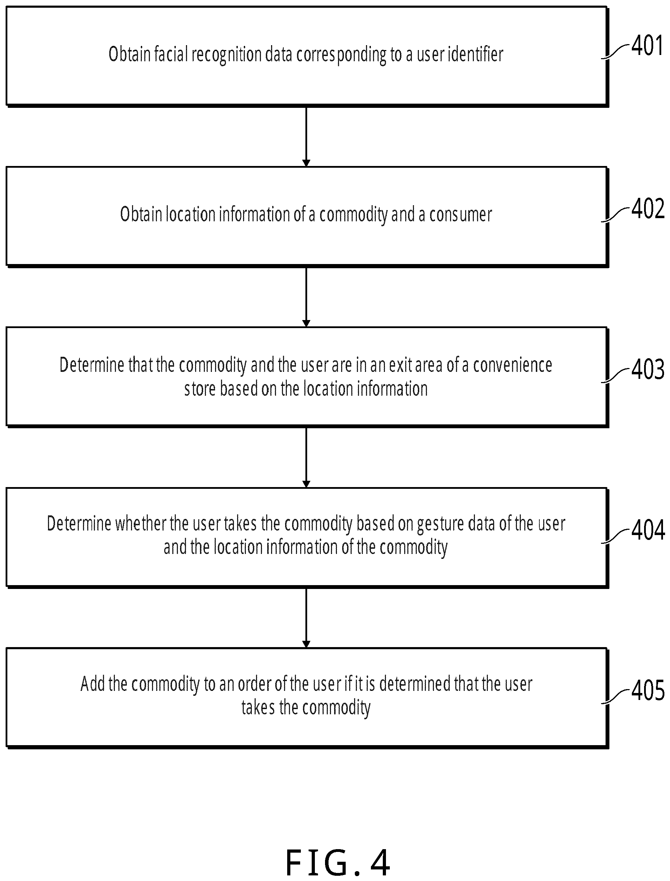

FIG. 4 illustrates an order information determination procedure. When a consumer enters a convenience store to select and purchase a commodity, the consumer can enter the convenience store from the entrance area, can select and purchase commodities on the shelves during shopping, and can hold the commodity with a hand or an arm, and directly leave the convenience store from the exit area after completing the selection and the purchase. In this process, the shopping management system can perform the procedure in FIG. 4 to determine order information, that is, determine commodities selected and purchased by the consumer in the convenience store.

In step 401, when the consumer enters the convenience store to select and purchase a commodity, the consumer can enter a member ID in the entrance area. For example, the user can generate a two-dimensional code identifying identity information by using shopping software installed on a smartphone. The shopping software can be client software in the shopping management system, and the user has entered the member ID registered with the client software to the mobile phone. The member ID can be referred to as a user identifier. Alternatively, the user can enter the member ID through NFC by using an intelligent device such as a band, and the intelligent device has been associated with the member ID. The client software can further upload the obtained member ID to the shopping management system.

In addition, in the entrance area, the facial recognition device 201 can perform facial recognition on the user, and transmit obtained facial recognition data to the shopping management system. As such, the shopping management system can receive information about binding between the facial recognition data and the member ID used as the user identifier, which is equivalent to learning of a member ID corresponding to a consumer having a facial feature, and the shopping management system can store the mapping relationship in the database 305.

When the user enters the storage area to select and purchase a commodity, in the entire convenience store, an RFID label attached to a commodity can be located by using the RFID reader 208, ect. installed in the store. For example, the reader 208 can receive a label signal sent by the RFID label on the commodity. The label signal can include commodity information. For example, the commodity information can include a commodity code uniquely identifying the commodity. In step 402, the reader 208 can transmit the label signal to the shopping management system, and the shopping management system can perform positioning calculation based on the label signal to obtain location information of the positioning label on the commodity. For example, with reference to FIG. 3, the processor 301 on the computing device can execute an executable code in the shopping management module 3042, perform positioning calculation based on the label signal, and store the location information obtained through calculation in the database 305 by executing an executable code in the data management module 3041. In the present step, positioning can be performed based on a common RFID positioning technology. In addition, some facial recognition devices can be installed in a selection and purchase area in the convenience store. These devices not only can detect facial features, but also can locate persons to obtain location information of consumers in the store.

In step 403, the shopping management system can determine, based on the location information, that the commodity and the user are in the exit area of the convenience store.

In step 404, the shopping management system can perform human gesture recognition on the user by using the facial recognition device 210 installed in the exit area, to obtain gesture data of the user, and position the commodity label by using the reader 208 in the exit area, to obtain location information of the commodity. An input video can be analyzed to recognize a human gesture, for example, whether a person puts hands in front of the chest or hangs the hands, or whether the person holds arms tightly. The gesture data of the user is equivalent to a location relationship between all parts of a human body.

In this example, whether a gesture of the user is taking the commodity can be determined based on the gesture data and the location information. For example, whether the commodity can be taken by using a gesture of a user part corresponding to the location information of the positioning label can be determined based on the gesture data. Assume that the user part corresponding to a location of the positioning label is the user's chest, but the gesture data of the user shows that there is nothing in front of the chest, and the user hangs the hands, the commodity is not held by the user. In an opposite example, assume that the user part corresponding to the location of the positioning label is in a side thigh part of the user, and it is determined, based on the gesture data, that the user hangs the hand and the hand of the user is also in this area, it can be determined that the user holds the commodity with the hand.

In step 405, commodity information of the commodity can be added to an order of the user if a determination result is that the user takes the commodity. In addition, in the exit area, the facial recognition device obtains facial recognition data again, obtains a member ID corresponding to the data, and adds the commodity to the order corresponding to the member ID. If the corresponding member ID fails to be obtained through facial recognition, another method can be attempted to enter the member ID, for example, the member ID can be entered through a two-dimensional code or NFC. In commodity detection, a commodity label not belonging to the convenience store can be excluded.

During order information determination in the present patent, the gesture data of the user is recognized and the commodity is positioned, and then an order to which the commodity belongs is determined by using a location relationship between a gesture and the commodity. This method is more accurate in determining an order. For example, even if many people simultaneously take commodities on a shelf, a location relationship between a commodity and a user gesture still needs to be determined, and an order is determined only when a commodity satisfies a commodity taking gesture. For another example, even if the user places commodities with a high similarity in wrong places, there is no effect on determination of a final commodity and a user gesture. This method can be more accurate in determining an order to which a commodity belongs without effect of many misleading factors.

An order ownership of a commodity can be determined based on a distance between the commodity and a cart at any time after the user enters the convenience store. In some instances, after the member ID and the bound facial recognition data are obtained in the entrance area, recognition is not performed during commodity selection and purchase in the storage area. Instead, a location relationship between a user gesture and the commodity can be recognized in the exit area, so as to determine an order to which the commodity belongs.

In addition, when adding the commodity to the order of the user, the shopping management system can update order information data in the database 305, that is, selected and purchased commodities in the order of the user are updated. In addition, the shopping management system can further send the order information to the smartphone of the user. As shown in FIG. 3, the client software installed on the smartphone of the user can have a cart information interface, and the cart information interface can display a list of commodity order information. The user can see the following information: "You have selected and purchased the following commodities: bananas and apples", so that the user can know a change in the order at any time. The cart information interface can further display a quantity of commodities selected and purchased by the user, or can further display more other commodity information, such as places of production of the commodities. Use of other auxiliary determination technologies is not excluded in the present patent to assist in determining the order information, for example, a plurality of sensors can be used for assistance.

After the order information is determined, the shopping management system can generate a bill to be paid based on the order, and push the bill to be paid to the user. The user can pay for the bill in a fund account corresponding to the member ID. The fund account of the user needs to have sufficient money, or can be connected to another payment channel having sufficient money that can be used to pay for the order. Otherwise, the user possibly is restricted to leave with a commodity beyond a payment capability or a warning device can be triggered to give a warning.

In the example in the present patent, an RFID label is attached to a commodity, and the commodity is positioned by using the RFID label. In specific implementation, this is not limited thereto, and the commodity can be positioned in another positioning method. Another positioning label can be attached to the commodity, and the commodity is positioned by using another corresponding positioning technology.

According to the method in the present patent, order information of a consumer can be quickly and accurately determined, and payment of an order are automatically completed. After completing shopping, the consumer can directly leave without queuing up at a checkout counter for payment, thereby improving shopping efficiency and providing fairly good shopping experience.

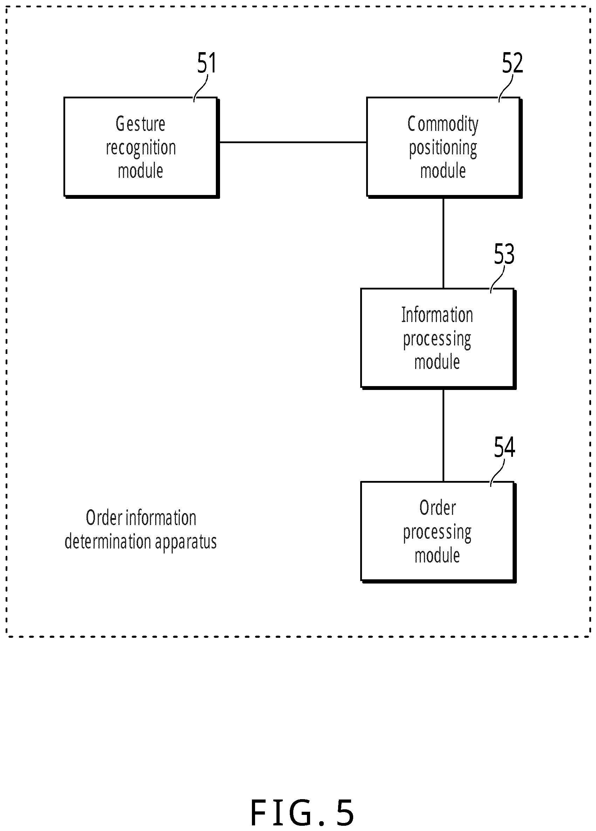

The present patent further provides an order information determination apparatus. The apparatus can be the shopping management module in FIG. 3 or the shopping management system in FIG. 1. As shown in FIG. 5, the apparatus can include a gesture recognition module 51, a commodity positioning module 52, an information processing module 53, and an order processing module 54.

The gesture recognition module 51 is configured to perform human gesture recognition on a user to obtain gesture data of the user.

The commodity positioning module 52 is configured to position a commodity to obtain location information of the commodity.

The information processing module 53 is configured to determine whether a gesture of the user is taking the commodity based on the gesture data and the location information.

The order processing module 54 is configured to add the commodity to an order of the user if a determination result is that the user takes the commodity.

The information processing module 53 is configured to: position a positioning label on the commodity based on a label signal sent by the positioning label, to obtain location information of the positioning label, where the label signal includes commodity information of the commodity; and determine, based on the gesture data of the user, whether the commodity can be taken by using a gesture of a user part corresponding to the location information of the positioning label.

In an example, the positioning label is a radio frequency identification RFID label.

The information processing module 53 is configured to determine whether the gesture of the user is taking the commodity when it is determined that the commodity and the user are in an exit area based on location information of the commodity and the user obtained through positioning.

The order processing module 54 is further configured to: obtain, in an entrance area, facial recognition data of the user who selects and purchases the commodity, where the facial recognition data corresponds to a user identifier of the user; and obtain facial recognition data again to obtain a user identifier corresponding to the facial recognition data when it is determined that the commodity and the user are in the exit area, where the order is an order of the user corresponding to the user identifier.

The apparatus or the module described in the previous implementations can be implemented by a computer chip or an entity, or implemented by a product having a specific function. Atypical implementation device is a computer. A specific form of the computer can be a personal computer, a laptop computer, a cellular phone, a camera phone, a smartphone, a personal digital assistant, a media player, a navigation device, an e-mail transceiver device, a game console, a tablet computer, a wearable device, or a combination of any several devices in these devices.

For ease of description, the previous apparatus is described by dividing the functions into various modules. Certainly, when the present patent is implemented, the functions of each module can be implemented in one or more pieces of software and/or hardware.

For example, technical carriers related to the payment in this implementation of the present patent can include near field communication (NFC), WIFI, 3G/4G/5G, a POS card swiping technology, a two-dimensional code scanning technology, a barcode scanning technology, Bluetooth, infrared, a short message service (SMS), and a multimedia message service (MMS).

The previous descriptions are merely examples of implementations of the present patent, but are not intended to limit the present patent.

## Claims

1. A computer implemented method for determining order information, wherein the method is used to determine an association between a user and a commodity selected and purchased by the user, the method comprising:
determining (402) i) location information of the commodity in a convenience store and ii) location information of the user in the convenience store;
determining (403), based on the location information of the commodity and the location information of the user, that the commodity and the user are in an exit area (103) of the convenience store;
performing (404), by a facial recognition device (210) installed at the exit area, human gesture recognition on the user to obtain gesture data of the user; determining (404), by a reader (208) installed in the exit area and based on a signal sent by a positioning label on the commodity, a location of the positioning label to obtain location information of the commodity in the exit area, wherein the signal comprises information representing the commodity;
determining, based on the gesture data of the user and the location information of the commodity in the exit area, whether a gesture of the user indicates that the user is taking the commodity, the determining comprising
i) identifying, using the gesture data, a) a user body part that corresponds to the location information of the positioning label and b) hand gestures made by the user,
ii) determining whether the identified user body part and hand gestures made by the user indicate that the user is holding the commodity, and
iii) in response to determining that the identified user body party and the hand gestures made by the user indicate that the user is holding the commodity, determining that a gesture of the user indicates that the user is taking the commodity; and
in response to determining that the gesture of the user indicates that the user is taking the commodity, adding (405) the information representing the commodity to an order of the user.

2. The method according to claim 1, wherein determining whether the identified user body part and the hand gestures made by the user indicate that the user is holding the commodity comprises determining whether the user body part and user hands are in a same area.

3. The method according to claim 1, wherein the positioning label is a radio frequency identification RFID label.

4. The method according to claim 1, wherein
i) determining location information of the user in the convenience store comprises obtaining (401), in an entrance area, facial recognition data of the user who selects and purchases the commodity, wherein the facial recognition data corresponds to a user identifier of the user, and
ii) the method further comprises obtaining facial recognition data again to obtain a user identifier corresponding to the facial recognition data in response to determining that the commodity and the user are in the exit area, wherein the order is an order of the user corresponding to the user identifier.

5. The method according to claim 1, further comprising, in response to determining that the gesture of the user indicates that the user is taking the commodity, transmitting a message to a user device for providing an output indicating the commodity.

6. An apparatus for determining order information, wherein the apparatus comprises:
a gesture recognition module (51), configured to determine location information on a user and perform human gesture recognition on the user to obtain gesture data of the user;
a commodity positioning module (52), configured to position a commodity to obtain location information of the commodity;
an information processing module (53), configured to determine whether a gesture of the user is taking the commodity based on the gesture data and the location information; and
an order processing module (54), configured to add the commodity to an order of the user in response to determining that a determination result is that the user takes the commodity,
wherein the gesture recognition module, commodity positioning module, information processing module and order processing module are configured to perform the method of any one of claims 1 to 5.

## Patentansprüche

1. Computerimplementiertes Verfahren zum Bestimmen von Auftragsinformationen, wobei das Verfahren verwendet wird, um eine Verknüpfung zwischen einem Benutzer und einer Ware, die vom Benutzer ausgewählt und gekauft wird, zu bestimmen, wobei das Verfahren Folgendes umfasst:
Bestimmen (402) i) von Standortinformationen der Ware in einem Bedarfsartikelgeschäft und ii) Standortinformationen des Benutzers im Bedarfsartikelgeschäft;
Bestimmen (403) auf Basis der Standortinformationen der Ware und der Standortinformationen des Benutzers, dass sich die Ware und der Benutzer in einem Ausgangsbereich (103) des Bedarfsartikelgeschäfts befinden;
Durchführen (404) einer menschlichen Gestenerkennung am Benutzer durch eine Gesichtserkennungsvorrichtung (210), die im Ausgangsbereich installiert ist, um Gestendaten des Benutzers zu erhalten; Bestimmen (404) eines Standorts eines Positionsbestimmungsetiketts durch einen Leser (208), der im Ausgangsbereich installiert ist, und auf Basis eines Signals, das vom Positionsbestimmungsetikett auf der Ware gesendet wird, um Standortinformationen der Ware im Ausgangsbereich zu erhalten, wobei das Signal Informationen umfasst, die die Ware repräsentieren;
Bestimmen auf Basis der Gestendaten des Benutzers und der Standortinformationen der Ware im Ausgangsbereich, ob eine Geste des Benutzers anzeigt, dass der Benutzer die Ware nimmt, wobei das Bestimmen Folgendes umfasst
i) Identifizieren a) eines Benutzerkörperteils, der den Standortinformationen des Positionsbestimmungsetiketts entspricht, und b) von Handgesten, die vom Benutzer gemacht werden, unter Verwendung der Gestendaten,
ii) Bestimmen, ob der identifizierte Benutzerkörperteil und die vom Benutzer gemachten Handgesten anzeigen, dass der Benutzer die Ware hält, und
iii) in Reaktion auf das Bestimmen, dass der identifizierte Benutzerkörperteil und die vom Benutzer gemachten Handgesten anzeigen, dass der Benutzer die Ware hält, Bestimmen, dass eine Geste des Benutzers anzeigt, dass der Benutzer die Ware nimmt; und
in Reaktion auf das Bestimmen, dass die Geste des Benutzers anzeigt, dass der Benutzer die Ware nimmt, Hinzufügen (405) der Informationen, die die Ware repräsentieren, zu einem Auftrag des Benutzers.

2. Verfahren nach Anspruch 1, wobei das Bestimmen, ob der identifizierte Benutzerkörperteil und die vom Benutzer gemachten Handgesten anzeigen, dass der Benutzer die Ware hält, das Bestimmen, ob sich der Benutzerkörperteil und die Benutzerhände im selben Bereich befinden, umfasst.

3. Verfahren nach Anspruch 1, wobei das Positionsbestimmungsetikett ein Funkfrequenzidentifikations(RFID)-Etikett ist.

4. Verfahren nach Anspruch 1, wobei
i) das Bestimmen von Standortinformationen des Benutzers im Bedarfsartikelgeschäft das Erhalten (401) von Gesichtserkennungsdaten des Benutzers, der die Ware auswählt und kauft, in einem Eingangsbereich umfasst, wobei die Gesichtserkennungsdaten einer Benutzerkennung des Benutzers entsprechen, und
ii) das Verfahren in Reaktion auf das Bestimmen, dass sich die Ware und der Benutzer im Ausgangsbereich befinden, ferner das erneute Erhalten von Gesichtserkennungsdaten, um eine Benutzerkennung zu erhalten, die den Gesichtserkennungsdaten entspricht, umfasst, wobei der Auftrag ein Auftrag des Benutzers ist, der der Benutzerkennung entspricht.

5. Verfahren nach Anspruch 1, das in Reaktion auf das Bestimmen, dass die Geste des Benutzers anzeigt, dass der Benutzer die Ware nimmt, ferner das Übertragen einer Nachricht zu einer Benutzervorrichtung zum Bereitstellen einer Ausgabe, die die Ware anzeigt, umfasst.

6. Einrichtung zum Bestimmen von Auftragsinformationen, wobei die Einrichtung Folgendes umfasst:
ein Gestenerkennungsmodul (51), das dazu ausgelegt ist, Standortinformationen an einem Benutzer zu bestimmen und eine menschliche Gestenerkennung am Benutzer durchzuführen, um Gestendaten des Benutzers zu erhalten;
ein Warenpositionsbestimmungsmodul (52), das dazu ausgelegt ist, eine Positionsbestimmung an einer Ware durchzuführen, um Standortinformationen der Ware zu erhalten;
ein Informationsverarbeitungsmodul (53), das dazu ausgelegt ist, auf Basis der Gestendaten und der Standortinformationen zu bestimmen, ob eine Geste des Benutzers die des Nehmens der Ware ist; und
ein Auftragsverarbeitungsmodul (54), das dazu ausgelegt ist, in Reaktion auf das Bestimmen, dass ein Bestimmungsergebnis das ist, dass der Benutzer die Ware nimmt, die Ware zu einem Auftrag des Benutzers hinzuzufügen,
wobei das Gestenerkennungsmodul, das Warenpositionsbestimmungsmodul, das Informationsverarbeitungsmodul und das Auftragsverarbeitungsmodul dazu ausgelegt sind, das Verfahren nach einem der Ansprüche 1 bis 5 durchzuführen.

## Revendications

1. Procédé mis en œuvre par ordinateur pour déterminer des informations de commande, où le procédé est utilisé pour déterminer une association entre un utilisateur et un produit sélectionné et acheté par l'utilisateur, le procédé comprenant les étapes suivantes :
déterminer (402) i) des informations de localisation du produit dans un commerce de proximité et ii) des informations de localisation de l'utilisateur dans le commerce de proximité ;
déterminer (403), sur la base des informations de localisation du produit et des informations de localisation de l'utilisateur, que la produit et l'utilisateur sont dans une zone de sortie (103) du commerce de proximité ;
effectuer (404), par un dispositif de reconnaissance faciale (210) installé dans la zone de sortie, une reconnaissance de gestes humains sur l'utilisateur pour obtenir des données de gestes de l'utilisateur ; déterminer (404), par un lecteur (208) installé dans la zone de sortie et sur la base d'un signal envoyé par une étiquette de positionnement sur le produit, une localisation de l'étiquette de positionnement pour obtenir des informations de localisation du produit dans la zone de sortie, où le signal comprend des informations représentant le produit ;
déterminer, sur la base des données de gestes de l'utilisateur et des informations de localisation du produit dans la zone de sortie, si un geste de l'utilisateur indique que l'utilisateur prend le produit, la détermination comprenant les étapes suivantes :
i) identifier, au moyen des données de gestes, a) une partie du corps de l'utilisateur qui correspond aux informations de localisation de l'étiquette de positionnement et b) les gestes de la main effectués par l'utilisateur,
ii) déterminer si la partie du corps de l'utilisateur identifiée et les gestes de la main effectués par l'utilisateur indiquent que l'utilisateur tient la produit, et
iii) en réponse à la détermination que la partie du corps de l'utilisateur identifiée et les gestes de la main effectués par l'utilisateur indiquent que l'utilisateur tient le produit, déterminer qu'un geste de l'utilisateur indique que l'utilisateur prend le produit ; et
en réponse à la détermination que le geste de l'utilisateur indique que l'utilisateur prend le produit, ajouter (405) les informations représentant le produit à une commande de l'utilisateur.

2. Procédé selon la revendication 1, dans lequel déterminer si la partie du corps de l'utilisateur identifiée et les gestes de la main effectués par l'utilisateur indiquent que l'utilisateur tient le produit comprend de déterminer si la partie du corps de l'utilisateur et les mains de l'utilisateur sont dans une même zone.

3. Procédé selon la revendication 1, dans lequel l'étiquette de positionnement est une étiquette d'identification par radiofréquence RFID.

4. Procédé selon la revendication 1, dans lequel :
i) la détermination des informations de localisation de l'utilisateur dans le commerce de proximité comprend d'obtenir (401), dans une zone d'entrée, des données de reconnaissance faciale de l'utilisateur qui sélectionne et achète le produit, où les données de reconnaissance faciale correspondent à un identifiant d'utilisateur de l'utilisateur, et
ii) le procédé comprend en outre d'obtenir des données de reconnaissance faciale à nouveau pour obtenir un identifiant d'utilisateur correspondant aux données de reconnaissance faciale en réponse à la détermination que le produit et l'utilisateur sont dans la zone de sortie, où la commande est une commande de l'utilisateur correspondant à l'identifiant d'utilisateur.

5. Procédé selon la revendication 1, comprenant en outre, en réponse à la détermination que le geste de l'utilisateur indique que l'utilisateur prend le produit, de transmettre un message à un dispositif utilisateur pour fournir une sortie indiquant le produit.

6. Appareil pour déterminer des informations de commande, où l'appareil comprend :
un module de reconnaissance de gestes (51), configuré pour déterminer des informations de localisation sur un utilisateur et effectuer une reconnaissance de gestes humains sur l'utilisateur pour obtenir des données de gestes de l'utilisateur ;
un module de positionnement de produit (52), configuré pour positionner un produit afin d'obtenir des informations de localisation du produit ;
un module de traitement d'informations (53), configuré pour déterminer si un geste de l'utilisateur prend le produit sur la base des données de gestes et des informations de localisation ; et
un module de traitement de commande (54), configuré pour ajouter le produit à une commande de l'utilisateur en réponse à la détermination qu'un résultat de la détermination est que l'utilisateur prend le produit,
où le module de reconnaissance de gestes, le module de positionnement de produit, le module de traitement d'informations et le module de traitement de commande sont configurés pour exécuter le procédé de l'une quelconque des revendications 1 à 5.
